# EUROPÄISCHE PATENTSCHRIFT

(11) **EP 4 455 509 B1**
(45) Veröffentlichungstag und Bekanntmachung des Hinweises auf die Patenterteilung: **12.08.2026**
(21) Anmeldenummer: 23170291.1
(22) Anmeldetag: 27.04.2023
(51) Int. Cl.: F16H 1/20, F16H 27/08

(54) **GETRIEBEVORRICHTUNG FÜR EINEN VERSTELLANTRIEB**
TRANSMISSION DEVICE FOR AN ADJUSTING DRIVE
DISPOSITIF D'ENGRENAGE POUR UN ENTRAÎNEMENT DE RÉGLAGE

(43) Veröffentlichungstag der Anmeldung: 30.10.2024
(73) Patentinhaber: Magna Auteca GmbH, 8160 Krottendorf bei Weiz (AT)
(72) Erfinder: SCHADLER, Bernhard Hubert, 8211 Gersdorf an der Feistritz (AT)
(74) Vertreter: Zangger, Bernd

(56) Entgegenhaltungen:
- CH-A- 543 709
- US-A- 3 426 608
- US-A1- 2006 137 248

## Beschreibung

### Gebiet der Erfindung

Die vorliegende Erfindung betrifft eine Getriebevorrichtung, insbesondere für einen Verstellantrieb in einem Kraftfahrzeug.

### Stand der Technik

Es ist bekannt, Verstellantriebe in Kraftfahrzeugen zu verwenden, mit deren Hilfe ein von einer Ausgangsposition zu einer Zielposition verstellbares Element des Kraftfahrzeugs, üblicherweise mittels eines Elektromotors als Antrieb und über ein geeignetes Getriebe, verstellt werden kann. Beispielsweise können auf diese Weise Klappen geöffnet und geschlossen werden.

Bei einer Vielzahl von elektrischen Verstellantrieben ist ein hohes Antriebsmoment in Verbindung mit einer Verstellzeit gefordert, um einen Mechanismus zu lösen oder zu schließen. Insbesondere im Außenbereich besteht oftmals die Notwendigkeit Vereisungen zu überwinden, um eine Verstellung zu gewährleisten. Dies wird in der Regel über einen entsprechenden Motor in Kombination mit einem Getriebe erreicht.

Die Motor-Getriebe Kombination eines derartigen Antriebs muss auf das benötigte maximale Drehmoment, in Verbindung mit der geforderten Verstellzeit, ausgelegt werden. Üblicherweise führt das zu einer größeren Dimensionierung des Motors.

Aus der CH 543 709 A ist eine Antriebsvorrichtung für die Zeitsteuerung von Feuerungsautomaten bekannt, welche die Basis für die zweiteilige Form des Anspruchs 1 darstellt, und entsprechend die Merkmale des Oberbegriffs des Anspruchs 1 zeigt.

Die US 2006/137248 A1 offenbart eine Vorrichtung zur Steuerung einer motorbetriebenen Tür, umfassend einen Öffnungs-/Schließmechanismus, der zum Öffnen und Schließen der Tür konfiguriert ist; und einen Getriebemechanismus, der eine Vielzahl von Zahneinheiten enthält, von denen jede einen anderen Eingriff hat, und der so konfiguriert ist, dass er ein Drehmoment des Motors auf den Öffnungs-/Schließmechanismus überträgt, wobei das auf den Öffnungs-/Schließmechanismus übertragene Drehmoment durch Auswahl einer Zahneinheit auf der Grundlage einer Position der Tür zum Zeitpunkt des Beginns eines Öffnungs- oder Schließvorgangs der Tür geändert wird.

Aus US 3 426 608 A ist ein Zahnradgetriebe bekannt, das Folgendes umfasst: eine erste und eine zweite Welle; ein erstes Zahnrad und ein zweites Zahnrad, die starr mit der ersten Welle verbunden sind, um sich mit dieser zu drehen; ein drittes Zahnrad; und ein viertes Zahnrad, das starr mit der zweiten Welle verbunden ist, um sich mit dieser zu drehen, wobei das erste Zahnrad mit dem dritten Zahnrad als ein erstes Eingriffspaar in Eingriff gebracht werden kann und das zweite Zahnrad mit dem vierten Zahnrad als ein zweites Eingriffspaar in Eingriff gebracht werden kann, das erste Zahnrad mit dem dritten Zahnrad als erstes Eingriffspaar in Eingriff bringbar ist und das zweite Zahnrad mit dem vierten Zahnrad als zweites Eingriffspaar in Eingriff bringbar ist, wobei eines der Zahnräder des ersten Eingriffspaars ein erstes Segmentzahnrad ist und einen letzten Zahn aufweist und eines der Zahnräder des zweiten Eingriffspaars ein zweites Segmentzahnrad ist und einen ersten Zahn aufweist, der gegenüber dem letzten Zahn um einen Winkel versetzt ist, der im Wesentlichen gleich dem Aussparungswinkel des ersten Segmentzahnrads plus dem Annäherungswinkel des zweiten Segmentzahnrads ist, so dass der letzte Zahn auf dem zweiten Eingriffspaar ein zweites Segmentrad ist. so dass der letzte Zahn auf dem ersten Segmentzahnrad sich von dem anderen Zahn des ersten Eingriffspaares löst, wenn sich der erste Zahn auf dem zweiten Segmentzahnrad in Eingriff mit dem anderen Zahn des zweiten Eingriffspaares bewegt, wodurch eines der Eingriffspaare während des gesamten Übergangs des Eingriffs von dem ersten Eingriffspaar zu dem zweiten Eingriffspaar in Eingriff ist.

### Zusammenfassung der Erfindung

Es ist eine Aufgabe der Erfindung, eine Getriebevorrichtung, insbesondere für einen Verstellantrieb in einem Kraftfahrzeug, anzugeben, mit deren Hilfe ein Antrieb, insbesondere ein Verstellantrieb, die oben beschriebenen Probleme vermeidet, effizient betrieben werden kann und/oder klein gebaut werden kann. Eine weitere Aufgabe ist es, eine entsprechende Antriebsvorrichtung anzugeben.

Die Lösung der Aufgabe erfolgt durch eine Getriebevorrichtung mit den Merkmalen gemäß Anspruch 1.

Die Getriebevorrichtung, insbesondere für einen Verstellantrieb in einem Kraftfahrzeug, umfasst ein von dem Motor antreibbares Antriebszahnrad und ein mit dem Antriebszahnrad kämmendes und somit vom Antriebszahnrad antreibbares Abtriebszahnrad, wobei das Antriebszahnrad als Doppelzahnrad ausgebildet ist, sodass das Antriebszahnrad ein erstes Zahnrad umfasst und ein zum ersten Zahnrad koaxiales und drehfestes zweites Zahnrad umfasst, wobei das erste Zahnrad einen kleineren Umfang aufweist, als das zweite Zahnrad, wobei das Abtriebszahnrad als Doppelzahnrad ausgebildet ist, sodass das Abtriebszahnrad ein drittes Zahnrad umfasst und ein zum dritten Zahnrad koaxiales und drehfestes viertes Zahnrad umfasst, wobei das dritte Zahnrad einen größeren Umfang aufweist, als das vierte Zahnrad, wobei das Antriebszahnrad und das Abtriebszahnrad so ausgebildet und zueinander positioniert sind, dass in einem ersten Umfangsbereich des Antriebszahnrads eine Verzahnung am ersten Zahnrad ausgebildet ist, die mit einer Verzahnung des dritten Zahnrads kämmt und dass in einem zweiten Umfangsbereich des Antriebszahnrads eine Verzahnung am zweiten Zahnrad ausgebildet ist, die mit einer Verzahnung des vierten Zahnrads kämmt, so dass im ersten Umfangsbereich eine andere Übersetzung zwischen Antriebszahnrad und Abtriebszahnrad vorliegt, als im zweiten Umfangsbereich.

Erfindungsgemäß wird somit eine Getriebevorrichtung verwendet, die zwei Doppelzahnräder als Antriebs- und als Abtriebszahnrad nutzt. Die beiden Zahnräder jedes Doppelzahnrads sind zueinander drehfest, bevorzugt einstückig, ausgebildet und weisen eine gemeinsame Achse auf, bevorzugt eine gemeinsame Bohrung im gemeinsamen Zentrum der beiden Zahnräder. Jeweils eines der Zahnräder ist größer als das andere der beiden Zahnräder eines Doppelzahnrads ausgebildet. Das Antriebszahnrad und das Abtriebszahnrad sind fix zueinander positioniert. Das kleinere Zahnrad des Antriebszahnrads ist gegenüberliegend dem größeren Zahnrad des Abtriebszahnrads angeordnet und umgekehrt, das größere Zahnrad des Antriebszahnrads ist gegenüberliegend dem kleineren Zahnrad des Abtriebszahnrads angeordnet. Der Radius des ersten Zahnrads und des dritten Zahnrads zusammen entspricht dem Radius des zweiten Zahnrads und des vierten Zahnrads zusammen, sodass auf Grund der Größenverhältnisse und der fixen Positionierung der Doppelzahnräder grundsätzlich jeweils beide Zahnräder des Antriebszahnrads mit beiden Zahnrädern des Abtriebszahnrads in Eingriff stehen würden.

Alle Zahnräder weisen jedoch erfindungsgemäß zumindest zwei unterschiedlich ausgebildete Sektoren in Umfangsrichtung auf. In einem dieser Sektoren, nämlich im ersten Umfangsbereich des Antriebszahnrads, ist eine Verzahnung am ersten Zahnrad ausgebildet. Dementsprechend ist an einem mit dem ersten Umfangsbereich des ersten Zahnrads kämmenden Umfangsbereich des Abtriebszahnrads ebenfalls eine Verzahnung, nämlich des dritten Zahnrads, ausgebildet, die mit dem ersten Zahnrad im ersten Umfangsbereich kämmt. In diesem ersten Umfangsbereich sind lediglich das erste und das dritte Zahnrad miteinander in Eingriff, das zweite und das vierte Zahnrad jedoch nicht. In einem anderen, bevorzugt komplementären, Sektor, nämlich im zweiten Umfangsbereich des Antriebszahnrads, ist eine Verzahnung am zweiten Zahnrad ausgebildet. Dementsprechend ist an einem mit dem zweiten Umfangsbereich des zweiten Zahnrads kämmenden Umfangsbereich des Abtriebszahnrads ebenfalls eine Verzahnung, nämlich des vierten Zahnrads, ausgebildet, die mit dem zweiten Zahnrad im zweiten Umfangsbereich kämmt. In diesem zweiten Umfangsbereich sind lediglich das zweite und das vierte Zahnrad miteinander in Eingriff, das erste und das dritte Zahnrad jedoch nicht

Die beiden Sektoren in Umfangsrichtung, also die beiden Umfangsbereiche, weisen daher eine voneinander verschiedene Übersetzung auf.

Die Getriebevorrichtung bildet somit eine Getriebestufe mit zwei unterschiedlichen diskreten Übersetzungen.

Durch den Einsatz einer solchen Getriebevorrichtung kann ab dem Start des Antriebs, insbesondere ab dem Start einer Verstellung, ein höheres Übersetzungsverhältnis darstellt werden und ein hohes Abtriebsmoment erreicht werden. Um eine gewünschte kurze Verstellzeit zu erreichen, wird nach einem vorgegebenen Drehwinkel, bei Übergang vom ersten Umfangsbereich in den zweiten Umfangsbereich, die Übersetzung reduziert und somit die Geschwindigkeit erhöht.

Durch die zwei diskreten Übersetzungen kann daher die Motorleistung reduziert werden, da die Anforderung an ein hohes Startmoment über das Getriebe realisiert wird. Hierdurch werden Vorteile bezüglich Kosten und Platzbedarf erreicht und ein größtmöglicher Verstellbereich mit konstanter Übersetzung realisiert.

Erfindungsgemäß ist in dem ersten Umfangsbereich des Antriebszahnrads keine Verzahnung am zweiten Zahnrad und/oder keine Verzahnung am vierten Zahnrad ausgebildet. In dem zweiten Umfangsbereich des Antriebszahnrads ist bevorzugt keine Verzahnung am ersten Zahnrad und/oder keine Verzahnung am dritten Zahnrad ausgebildet.

Erfindungsgemäß erstreckt sich der zweite Umfangsbereich über einen größeren Umfangsbereich des Antriebszahnrads als der erste Umfangsbereich, bevorzugt über zumindest die Hälfte besonders bevorzugt über zumindest drei Viertel des Umfangs des Antriebszahnrads.

Erfindungsgemäß weist die Verzahnung im ersten Umfangsbereich lediglich einen Zahn am ersten Zahnrad oder am dritten Zahnrad und dementsprechend lediglich eine damit kämmende Nut am dritten Zahnrad oder am ersten Zahnrad auf.

Bevorzugt umfasst das Antriebszahnrad und dementsprechend auch das Abtriebszahnrad lediglich den ersten und zweiten Umfangsbereich und keine weiteren unterschiedlichen Umfangsbereiche. Der erste und zweite Umfangsbereich erstrecken sich bevorzugt über zumindest im Wesentlichen den gesamten Umfang des Antriebs- und Abtriebszahnrads.

Bevorzugt ist das erste Zahnrad kleiner als das dritte und vierte Zahnrad ausgebildet. Bevorzugt ist das dritte Zahnrad größer als das erste und zweite Zahnrad ausgebildet. Vorzugsweise ist das zweite Zahnrad etwa gleich groß wie das vierte Zahnrad ausgebildet, so dass zwischen zweitem und viertem Zahnrad etwa eine 1:1 Übersetzung vorliegt.

Die Lösung der Aufgabe erfolgt auch durch eine Antriebsvorrichtung, insbesondere durch einen Verstellantrieb, umfassend einen Motor und eine Getriebevorrichtung wie zuvor beschrieben, wobei das Antriebszahnrad so eingerichtet ist, dass es vom Motor antreibbar ist, wobei das Abtriebszahnrad vom Antriebszahnrad antreibbar ist.

Das Antriebszahnrad ist bevorzugt unmittelbar von einer Verzahnung an einer Motorwelle des Motors antreibbar oder an einer Motorwelle des Motors ausgebildet.

Vorzugsweise sind Motor, Antriebszahnrad und Abtriebszahnrad so eingerichtet, dass an einer Startposition des Motors, insbesondere an einer Ruheposition des Verstellantriebs, der erste Umfangsbereich des Antriebszahnrads wirksam ist. Danach kann auf dem Weg zu einer vorgesehenen Endposition des Antriebs und an der Endposition, insbesondere an einer Verstellposition des Verstellantriebs, der zweite Umfangsbereich des Antriebszahnrads wirksam sein.

Der Begriff "wirksam sein" ist dabei zu verstehen als miteinander in Eingriff stehen, also kämmen der Verzahnungen im jeweiligen Umfangsbereich.

### Kurzbeschreibung der Zeichnungen

Die Erfindung wird im Folgenden beispielhaft unter Bezugnahme auf die Zeichnungen beschrieben.
- Fig. 1: ist eine Seitenansicht einer erfindungsgemäßen Getriebevorrichtung in einem Zustand mit wirksamem ersten Umfangsbereich.
- Fig. 2: ist eine Seitenansicht der erfindungsgemäßen Getriebevorrichtung gemäß Fig. 1 bei einem Übergang der Wirksamkeit vom ersten Umfangsbereich in den zweiten Umfangsbereich.
- Fig. 3: ist eine Seitenansicht der erfindungsgemäßen Getriebevorrichtung gemäß Fig. 1 in einem Zustand mit wirksamem zweiten Umfangsbereich.
- Fig. 4: ist eine dreidimensionale Darstellung der erfindungsgemäßen Getriebevorrichtung gemäß Fig. 1.

### Detaillierte Beschreibung der Erfindung

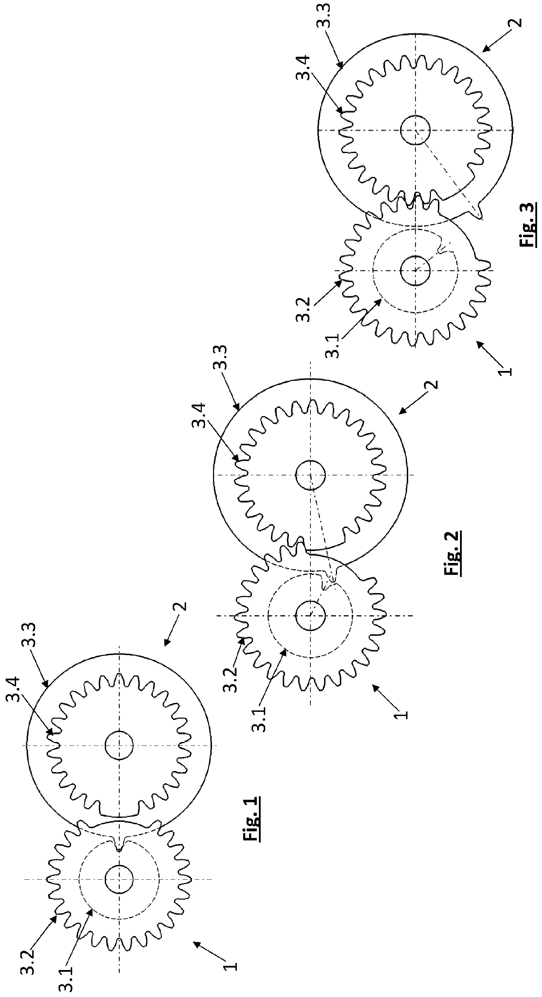

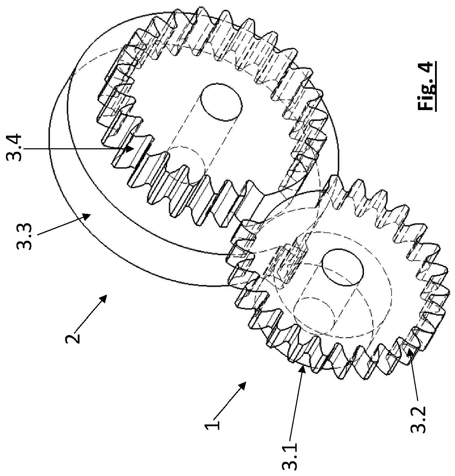

In Fig. 1 und Fig. 4 ist eine erfindungsgemäße Getriebevorrichtung in einem ersten Zustand dargestellt, in dem das Antriebszahnrad 1 mit dem Abtriebszahnrad 2 in einem ersten Umfangsbereich kämmt und somit der erste Umfangsbereich wirksam ist. Der erste Umfangsbereich des Antriebszahnrad 1 ist mit einem diesem zugeordneten ersten Umfangsbereich des Abtriebszahnrads 2 in kämmendem Eingriff. Der erste Umfangsbereich weist in der dargestellten Ausführungsform lediglich eine Nut an dem ersten Zahnrad 3.1 auf und einen Zahn an dem dritten Zahnrad 3.3.

Die Getriebevorrichtung, die als Getriebestufe für einen Verstellantrieb in einem Kraftfahrzeug ausgebildet ist, umfasst ein von einem Motor des Verstellantriebes antreibbares Antriebszahnrad 1 und ein mit dem Antriebszahnrad 1 kämmendes und somit vom Antriebszahnrad 1 antreibbares Abtriebszahnrad 2.

Das Antriebszahnrad 1 ist als Doppelzahnrad ausgebildet, sodass das Antriebszahnrad 1 ein erstes Zahnrad 3.1 umfasst und ein zum ersten Zahnrad 3.1 koaxiales und drehfestes zweites Zahnrad 3.2 umfasst, wobei das erste Zahnrad 3.1 einen kleineren Umfang aufweist, als das zweite Zahnrad 3.2.

Das Abtriebszahnrad 2 ist ebenfalls als Doppelzahnrad ausgebildet, sodass das Abtriebszahnrad 2 ein drittes Zahnrad 3.3 umfasst und ein zum dritten Zahnrad 3.3 koaxiales und drehfestes viertes Zahnrad 3.4 umfasst, wobei das dritte Zahnrad 3.3 einen größeren Umfang aufweist, als das vierte Zahnrad 3.4.

Das erste Zahnrad 3.1 ist kleiner als das dritte und vierte Zahnrad 3.3, 3.4 ausgebildet und dass das dritte Zahnrad 3.3 ist größer als das erste und zweite Zahnrad 3.1, 3.2 ausgebildet. Das zweite Zahnrad 3.2 ist etwa gleich groß wie das vierte Zahnrad 3.4 ausgebildet. Der Radius des ersten und dritten Zahnrads 3.1, 3.3 zusammen entspricht dem Radius des zweiten und vierten Zahnrads 3.2, 3.4 zusammen.

Das Antriebszahnrad 1 und das Abtriebszahnrad 2 sind so ausgebildet und zueinander positioniert, dass in einem ersten Umfangsbereich des Antriebszahnrads 1 eine Verzahnung am ersten Zahnrad 3.1 ausgebildet ist, die mit einer Verzahnung des dritten Zahnrads 3.3 kämmt, wie zuvor beschrieben und in Fig. 1 dargestellt. In dem ersten Umfangsbereich des Antriebszahnrads 1 ist keine Verzahnung am zweiten Zahnrad 3.2 und keine Verzahnung am vierten Zahnrad 3.4 ausgebildet. Das zweite und vierte Zahnrad 3.2, 3.4 sind jedenfalls im ersten Umfangsbereich des Antriebszahnrads 1 und des Abtriebszahnrads 2 so ausgebildet, dass diese nicht kämmen, also nicht in Eingriff sind, so dass diese Zahnräder die Übertragung des Drehmoments vom ersten Zahnrad 3.1 auf das dritte Zahnrad 3.3 nicht blockieren.

In einem zweiten Umfangsbereich des Antriebszahnrads 1 ist eine Verzahnung am zweiten Zahnrad 3.2 ausgebildet, die mit einer Verzahnung des vierten Zahnrads 3.4 kämmt. Dieser Zustand ist in Fig. 3 dargestellt. In dem zweiten Umfangsbereich des Antriebszahnrads 1 ist keine Verzahnung am ersten Zahnrad 3.1 und keine Verzahnung am dritten Zahnrad 3.3 ausgebildet. Das erste und dritte Zahnrad 3.1, 3.3 sind jedenfalls im zweiten Umfangsbereich des Antriebszahnrads 1 und des Abtriebszahnrads 2 so ausgebildet, dass diese nicht kämmen, also nicht in Eingriff sind, so dass diese Zahnräder die Übertragung des Drehmoments vom zweiten Zahnrad 3.2 auf das vierte Zahnrad 3.4 nicht blockieren.

In Fig. 2 ist der Übergang vom ersten Umfangsbereich in den zweiten Umfangsbereich dargestellt.

Im ersten Umfangsbereich liegt eine andere Übersetzung zwischen Antriebszahnrad 1 und Abtriebszahnrad 2 vor, als im zweiten Umfangsbereich, nämlich eine diskret unterschiedliche Übersetzung.

Der zweite Umfangsbereich erstreckt sich über einen größeren Umfangsbereich des Antriebszahnrads 1, als der erste Umfangsbereich, nämlich über zumindest drei Viertel des Umfangs des Antriebszahnrads 1. Die Verzahnung im ersten Umfangsbereich weist lediglich einen Zahn am dritten Zahnrad 3.3 auf und dementsprechend eine damit kämmende Nut am ersten Zahnrad 3.1. Diese Verzahnung im ersten Umfangsbereich wird beispielsweise lediglich für den Startbereich eines Verstellantriebes verwendet. Ab dem Start des Antriebs kann ein höheres Übersetzungsverhältnis darstellt werden und ein hohes Abtriebsmoment erreicht werden. Nach einem vorgegebenen Drehwinkel, bei Übergang vom ersten Umfangsbereich in den zweiten Umfangsbereich, wird die Übersetzung reduziert und somit die Geschwindigkeit erhöht.

### Bezugszeichenliste

- 1: Antriebszahnrad
- 2: Abtriebszahnrad
- 3.1: erstes Zahnrad
- 3.2: zweites Zahnrad
- 3.3: drittes Zahnrad
- 3.4: viertes Zahnrad

## Patentansprüche

1. Getriebevorrichtung, insbesondere für einen Verstellantrieb in einem Kraftfahrzeug, umfassend ein von dem Motor antreibbares Antriebszahnrad (1) und ein mit dem Antriebszahnrad (1) kämmendes und somit vom Antriebszahnrad (1) antreibbares Abtriebszahnrad (2),
wobei das Antriebszahnrad (1) als Doppelzahnrad ausgebildet ist, sodass das Antriebszahnrad (1) ein erstes Zahnrad (3.1) umfasst und ein zum ersten Zahnrad (3.1) koaxiales und drehfestes zweites Zahnrad (3.2) umfasst, wobei das erste Zahnrad (3.1) einen kleineren Umfang aufweist, als das zweite Zahnrad (3.2), wobei das Abtriebszahnrad (2) als Doppelzahnrad ausgebildet ist, sodass das Abtriebszahnrad (2) ein drittes Zahnrad (3.3) umfasst und ein zum dritten Zahnrad (3.3) koaxiales und drehfestes viertes Zahnrad (3.4) umfasst, wobei das dritte Zahnrad (3.3) einen größeren Umfang aufweist, als das vierte Zahnrad (3.4), wobei das Antriebszahnrad (1) und das Abtriebszahnrad (2) so ausgebildet und zueinander positioniert sind, dass in einem ersten Umfangsbereich des Antriebszahnrads (1) eine Verzahnung am ersten Zahnrad (3.1) ausgebildet ist, die mit einer Verzahnung des dritten Zahnrads (3.3) kämmt und dass in einem zweiten Umfangsbereich des Antriebszahnrads (1) eine Verzahnung am zweiten Zahnrad (3.2) ausgebildet ist, die mit einer Verzahnung des vierten Zahnrads (3.4) kämmt, so dass im ersten Umfangsbereich eine andere Übersetzung zwischen Antriebszahnrad (1) und Abtriebszahnrad (2) vorliegt, als im zweiten Umfangsbereich, wobei in dem ersten Umfangsbereich des Antriebszahnrads (1) keine Verzahnung am zweiten Zahnrad (3.2) und/oder keine Verzahnung am vierten Zahnrad (3.4) ausgebildet ist, und/oder dass in dem zweiten Umfangsbereich des Antriebszahnrads (1) keine Verzahnung am ersten Zahnrad (3.1) und/oder keine Verzahnung am dritten Zahnrad (3.3) ausgebildet ist, wobei der zweite Umfangsbereich sich über einen größeren Umfangsbereich des Antriebszahnrads (1) erstreckt, als der erste Umfangsbereich, **dadurch gekennzeichnet , dass** die Verzahnung im ersten Umfangsbereich lediglich einen Zahn am ersten Zahnrad (3.1) oder am dritten Zahnrad (3.3) und dementsprechend lediglich eine damit kämmende Nut am dritten Zahnrad (3.3) oder am ersten Zahnrad (3.1) aufweist.

2. Getriebevorrichtung nach Anspruch 1,
**dadurch gekennzeichnet , dass** der zweite Umfangsbereich sich über zumindest die Hälfte bevorzugt über zumindest drei Viertel des Umfangs des Antriebszahnrads (1).

3. Getriebevorrichtung nach zumindest einem der vorhergehenden Ansprüche,
**dadurch gekennzeichnet , dass** das erste Zahnrad (3.1) kleiner als das dritte und vierte Zahnrad (3.3, 3.4) ausgebildet ist und dass das dritte Zahnrad (3.3) größer als das erste und zweite Zahnrad (3.1, 3.2) ausgebildet ist und/oder dass das zweite Zahnrad (3.2) gleich groß wie das vierte Zahnrad (3.4) ausgebildet ist.

4. Antriebsvorrichtung, insbesondere Verstellantrieb, umfassend einen Motor und eine Getriebevorrichtung nach zumindest einem der vorhergehenden Ansprüche, wobei das Antriebszahnrad (1) so eingerichtet ist, dass es vom Motor angetrieben ist, wobei das Abtriebszahnrad (2) vom Antriebszahnrad (1) angetrieben ist.

5. Antriebsvorrichtung nach Anspruch 4,
**dadurch gekennzeichnet , dass** das Antriebszahnrad (1) unmittelbar von einer Verzahnung an einer Motorwelle des Motors angetrieben ist oder an einer Motorwelle des Motors ausgebildet ist.

6. Antriebsvorrichtung nach zumindest einem der Ansprüche 4 bis 5,
**dadurch gekennzeichnet, dass** Motor, Antriebszahnrad (1) und Abtriebszahnrad (2) so eingerichtet sind, dass an einer Startposition des Motors, insbesondere an einer Ruheposition des Verstellantriebs, der erste Umfangsbereich des Antriebszahnrads (1) wirksam ist und an einer Endposition, insbesondere an einer Verstellposition des Verstellantriebs, der zweite Umfangsbereich des Antriebszahnrads (1) wirksam ist.

## Claims

1. Gear device, in particular for an adjustment drive in a motor vehicle, comprising an input gearwheel (1) which can be driven by the motor, and an output gearwheel (2) which meshes with the input gearwheel (1) and hence can be driven by the input gearwheel (1), wherein the input gearwheel (1) is configured as a double gearwheel, so that the input gearwheel (1) comprises a first gearwheel (3.1) and a second gearwheel (3.2) coaxial to and rotationally fixed relative to the first gearwheel (3.1), wherein the first gearwheel (3.1) has a smaller circumference than the second gearwheel (3.2); wherein the output gearwheel (2) is configured as a double gearwheel so that the output gearwheel (2) comprises a third gearwheel (3.3) and a fourth gearwheel (3.4) coaxial to and rotationally fixed relative to the third gearwheel (3.3), wherein the third gearwheel (3.3) has a larger circumference than the fourth gearwheel (3.4); wherein the input gearwheel (1) and the output gearwheel (2) are configured and positioned relative to one another such that in a first circumferential region of the input gearwheel (1), a toothing is formed on the first gearwheel (3.1) which meshes with a toothing of the third gearwheel (3.3), and in a second circumferential region of the input gearwheel (1), a toothing is formed on the second gearwheel (3.2) which meshes with a toothing of the fourth gearwheel (3.4), so that the translation ratio between the input gearwheel (1) and the output gearwheel (2) in the first circumferential region is different from that in the second circumferential region, wherein
in the first circumferential region of the input gearwheel (1), no toothing is formed on the second gearwheel (3.2) and/or no toothing is formed on the fourth gearwheel (3.4), and/or in the second circumferential region of the input gearwheel (1), no toothing is formed on the first gearwheel (3.1) and/or no toothing is formed on the third gearwheel (3.3) wherein the second circumferential region extends over a larger circumferential region of the input gearwheel (1) than the first circumferential region, **characterized in that** the toothing in the first circumferential region comprises solely one tooth on the first gearwheel (3.1) or on the third gearwheel (3.3), and correspondingly one groove meshing therewith on the third gearwheel (3.3) or on the first gearwheel (3.1).

2. Gear device according to Claim 1,
**characterized in that** the second circumferential region extends over at least half, preferably over at least three-quarters of the circumference of the input gearwheel (1).

3. Gear device according to at least one of the preceding claims, **characterized in that** the first gearwheel (3.1) is formed smaller than the third and fourth gearwheels (3.3, 3.4), and the third gearwheel (3.3) is formed larger than the first and second gearwheels (3.1, 3.2), and/or that the second gearwheel (3.2) is formed the same size as the fourth gearwheel (3.4).

4. Drive device, in particular an adjustment drive, comprising a motor and a gear device according to at least one of the preceding claims, wherein the input gearwheel (1) is configured to be driven by the motor, wherein the output gearwheel (2) is driven by the input gearwheel (1).

5. Drive device according to Claim 4,
**characterized in that** the input gearwheel (1) is driven directly by a toothing on a motor shaft of the motor, or is formed on the motor shaft of the motor.

6. Drive device according to at least one of Claims 4 to 5,
**characterized in that** the motor, input gearwheel (1) and output gearwheel (2) are configured such that the first circumferential region of the input gearwheel (1) is active at a starting position of the motor, in particular at a rest position of the adjustment drive, and the second circumferential region of the input gearwheel (1) is active at an end position, in particular at an adjustment position of the adjustment drive.

## Revendications

1. Dispositif d'engrenage, en particulier pour un entraînement d'ajustement dans un véhicule à moteur, comprenant une roue dentée d'entraînement (1) pouvant être entraînée par le moteur et une roue dentée de sortie (2) s'engrenant avec la roue dentée d'entraînement (1) et pouvant ainsi être entraînée par la roue dentée d'entraînement (1),
la roue dentée d'entraînement (1) étant formée comme une double roue dentée si bien que la roue dentée d'entraînement (1) comprend une première roue dentée (3.1) et une deuxième roue dentée (3.2) coaxiale à la première roue dentée (3.1) et solidaire en rotation, la première roue dentée (3.1) comportant une circonférence plus petite que la deuxième roue dentée (3.2), la roue dentée de sortie (2) étant formée comme une double roue dentée si bien que la roue dentée de sortie (2) comprend une troisième roue dentée (3.3) et une quatrième roue dentée (3.4) coaxiale à la troisième roue dentée (3.3) et solidaire en rotation, la troisième roue dentée (3.3) présentant une circonférence plus grande que la quatrième roue dentée (3.4), la roue dentée d'entraînement (1) et la roue dentée de sortie (2) sont formées et positionnées l'une par rapport à l'autre de telle sorte que, dans une première zone périphérique de la roue dentée d'entraînement (1), une denture est formée sur la première roue dentée (3.1), qui s'engrène avec une denture de la troisième roue dentée (3.3) et que, dans une deuxième zone périphérique de la roue dentée d'entraînement (1), une denture est formée sur la deuxième roue dentée (3.2), laquelle s'engrène avec une denture de la quatrième roue dentée (3.4), de sorte qu'il existe entre la roue dentée d'entraînement (1) et la roue dentée de sortie (2) dans la première zone périphérique un rapport de transmission autre que dans la deuxième zone périphérique, aucune denture n'étant formée sur la deuxième roue dentée (3.2) et/ou aucune denture n'étant formée sur la quatrième roue dentée (3.4) dans la première zone périphérique de la roue dentée d'entraînement (1),
et/ou que, dans la deuxième zone périphérique de la roue dentée d'entraînement (1), aucune denture n'est formée sur la première roue dentée (3.1) et/ou aucune denture n'est formée sur la troisième roue dentée (3.3), la deuxième zone périphérique s'étendant sur une zone périphérique de la roue dentée d'entraînement (1) plus grande que la première zone périphérique,
**caractérisé en ce que** la denture dans la première zone périphérique ne présente qu'une dent sur la première roue dentée (3.1) ou sur la troisième roue dentée (3.3) et, par conséquent, une seule rainure s'engrenant avec celle-ci sur la troisième roue dentée (3.3) ou sur la première roue dentée (3.1).

2. Dispositif d'engrenage selon la revendication 1,
**caractérisé en ce que** la deuxième zone périphérique s'étend sur au moins la moitié, de préférence sur au moins les trois quarts de la périphérie de la roue dentée d'entraînement (1).

3. Dispositif d'engrenage selon au moins l'une des revendications précédentes,
**caractérisé en ce que** la première roue dentée (3.1) est plus petite que la troisième et la quatrième roue dentée (3.3, 3.4) et que la troisième roue dentée (3.3) est plus grande que la première et la deuxième roue dentée (3.1, 3.2) et/ou que la deuxième roue dentée (3.2) est de même taille que la quatrième roue dentée (3.4).

4. Dispositif d'entraînement, en particulier entraînement d'ajustement, comprenant un moteur et un dispositif d'engrenage selon au moins l'une des revendications précédentes, la roue dentée d'entraînement (1) étant mise au point de telle sorte qu'elle est entraînée par le moteur, la roue dentée de sortie (2) étant entraînée par la roue dentée d'entraînement (1).

5. Dispositif d'entraînement selon la revendication 4,
**caractérisé en ce que** la roue dentée d'entraînement (1) est entraînée directement par une denture sur un arbre de moteur du moteur ou est formée sur un arbre de moteur du moteur.

6. Dispositif d'entraînement selon au moins l'une des revendications 4 à 5,
**caractérisé en ce que** le moteur, la roue dentée d'entraînement (1) et la roue dentée de sortie (2) sont mis au point de telle sorte que la première zone périphérique de la roue dentée d'entraînement (1) agit sur une position de départ du moteur, en particulier sur une position de repos de l'entraînement d'ajustement, et la deuxième zone périphérique de la roue dentée d'entraînement (1) agit sur une position finale, en particulier sur une position d'ajustement de l'entraînement d'ajustement.
